# EUROPEAN PATENT SPECIFICATION

(11) **EP 2 516 240 B1**
(45) Date of publication and mention of the grant of the patent: **14.12.2016**
(21) Application number: 10803522.1
(22) Date of filing: 22.12.2010
(51) Int. Cl.: B62B 1/00, B62B 1/06, B62B 1/14, E01C 19/52

(54) **DEVICE FOR LIFTING AND TRANSPORTING OBJECTS**
VORRICHTUNG ZUM HEBEN UND TRANSPORTIEREN VON OBJEKTEN
DISPOSITIF DE LEVAGE ET TRANSPORT D'OBJETS

(30) Priority: 22.12.2009 NL 1037576
(43) Date of publication of application: 31.10.2012
(73) Proprietor: Scheringa, Frederik Albert, 1648 HV De Goorn (NL)
(72) Inventor: TROMP, Theodorus Cornelius Willibaldus, NL-1861 TE Bergen (NL)
(74) Representative: De Vries & Metman
(86) International application number: PCT/NL2010/050879
(87) International publication number: WO 2011/078669

(56) References cited:
- EP-A1- 0 701 023
- GB-A- 220 482
- GB-A- 729 326
- GB-A- 931 470
- GB-A- 2 172 249
- GB-A- 2 307 222
- US-A- 2 981 426

## Description

The present invention relates to a method for lifting and transporting objects, in particular pavement elements such as tiles or slabs or the like.

The weight of pavement elements, such as tiles, slabs or paving stones, and the usually large numbers required for masking a pavement, are such that placing these elements is laborious, requiring considerable physical exertion and time.

Trolleys have been designed for alleviating this work. For instance GB 2 172 249 discloses a trolley comprising levers pivotally mounted on a wheeled axle and manoeuvrable by means of handles. A slab is manoeuvred between an abutment plate and a thrust plate on a pivoting lever and lifted, the weight of the slab serving to increase the grip on itself. The trolley can be used for moving only one slab at a time. Only disjointed slabs can be lifted. The trolley of GB 2 172 249 cannot be used for separating slabs in an existing pavement.

EP 0 701 023 discloses a hand operated pavement slab transporter with a clamping unit. The clamping unit has one part fixed to the frame bottom and a second clamping part hinge connected to the frame.

GB 2 307 222 discloses a load moving trolley with a first gripper mounted on a first lever which is pivotally connected to a support means. A second gripper is mounted on the support means. Movement of the first lever moves the first gripper relative to the second gripper in order to grip or release a load.

Further examples of wheeled grippers and transported are disclosed in GB 220,482 and GB 729,326.

It is an object of the invention to provide a method enabling to move and lay large numbers of paving elements of in a shorter time. It is a further object to provide a device which can also remove and lift tiles or slabs from an existing pavement. Preferably, the device should be useful for a large range of sizes and weights of tiles, slabs and similar objects.

The object of the invention is achieved with a method according to claim. 1. Due to the high position of the lever, the space between the thrust plate and the abutment plate can be fully used. This makes it possible to lift and carry more than one tile or slab at a time. A plurality of tiles or slabs can be piled between the thrust and abutment plates by lifting the tiles one by one. A tile can be added to a pile between the thrust and abutment plates by placing the pile on the tile and subsequently lowering the thrust and abutment plates to engage opposite sides of the tile to be added. After lifting a pile of tiles or slabs the device can be used to position and lay the tiles one by one to form a pavement. If so desired, the device can also be used to lift a single object.

The disclosure also pertains to a device for transporting objects comprising an axle with one or more wheels, the axle carrying a frame with a handle and an abutment plate for abutment of a first edge of the paving element, and a lever which holds a thrust plate for engaging a second paving element edge, opposite to the first paving element edge, wherein the lever is pivotable between a holding position, wherein the thrust plate faces the abutment plate, and higher positions, wherein the abutment plate extends below the wheels when the abutment plate is in a vertical position.

This way, it becomes possible to cut out and separate pavement elements, such as tiles or slabs, from an existing pavement. To this end, first the abutment plate is positioned at a distance before a first edge of the pavement element. Then the thrust plate is lowered to abut the opposite side of the pavement element. Subsequently, the abutment plate is shifted to the first edge and forced into a joint adjoining the first edge. Then the frame with the abutment plate is tilted and the pavement element is clamped under its own weight between the abutment plate and the thrust plate. The device as a whose is tilted and can be rolled away to the desired destination. Optionally, the front end of the lever is at a level above the axle when the device is in the holding position, so a plurality of tiles or slabs can be cut out from the pavement and transported as a pile by the device.

To enable easier insertion of the abutment plate into a joint between two tiles or slabs of a pavement, the abutment plate may comprise a sharpened lower edge.

The lever can for instance be pivotable about the wheeled axle or about an axis at a distance above or in front of the wheeled axle. Optionally, the lever is pivotable about two or more axes, for instance about the wheeled axle and about a second pivoting axis at a distance above the wheeled axle. This has the advantage that the radius of the lever is substantially enhanced, so the lever can be moved over higher piles or objects to be gripped.

In a further possible embodiment, the abutment plate and the thrust plate can incline towards each other in downward direction when the device is in the holding position. This way, the distance between the lower edges of the thrust and abutment plates is less than the distance between their upper edges, and the gripping force will focus on the lowest tile or slab of a lifted pile. The angle of inclination between the thrust and abutment plates can for instance be between 0 - 12 degrees, e.g., between 1 - 5 degrees.

Optionally, the abutment plate is rotatable about a vertical axis, for instance over 0 - 12 degrees, e.g., 1 - 5 degrees.

The abutment plate can for instance be adjustable in height. This way, for cutting out thicker slabs or tiles, the abutment plate can be lowered, whereas for thinner plates the abutment plate can be positioned higher.

To enhance the practical possibilities of the device, it can be provided with a plurality of interchangeable abutment plates and/or thrust plates of different functional shape and/or size.

The device can also comprise one or more attachment parts attachable to the abutment plate and/or to the thrust plate for engagement with objects having a particular shape, if so desired. Such particularly shaped objects can for instance be curbs or rounded pavement sections for bordering a tree or the like.

In a specific embodiment, the lever comprises two or more arms carrying the thrust plate. The arms can for example be parallel and can be of the same length and diameter.

Optionally, the distance between the thrust plate and the abutment plate is adjustable, so the device can be used for a larger range of objects of different width. Such adjustability can for instance be achieved by using an lever comprising an inner tube telescopically arranged within an outer tube and a clamping ring on the outer surface of the outer tube, the clamping ring being provided with one or more cams or teeth inwardly extending through corresponding openings in the outer tube and with a tensioning member for switching the ring with the teeth between a clamping position where the cams engage the inner tube in a clamping manner, and a free position allowing relative movement of the inner and outer tubes.

The invention also relates to a clamping ring or clasp comprising two semi-circular parts which are pivotally coupled at one end, while the other ends are coupled by a tensioning member, wherein at least one of the semi-circular parts is provided with one or more inwardly projecting cams.

Optionally, the device can comprise a plurality of thrust plates, e.g., at the same or different distance from the abutment plate. In that case, the device can for example be used for gripping objects with a more complicated shape or outline. Optionally, the distances between the abutment plate and the individual thrust plates are independently adjustable.

The invention further relates to a method of transporting tiles or similar objects using a device comprising an axle with one or more wheels, the axle carrying a frame with a handle, an abutment plate in front of the one or more wheels for abutment of a first edge of the tile, and a lever with a backside end extending from the backside of the one or more wheels and a front end carrying a thrust plate for engaging a second edge of the tile opposite to the first edge, wherein the lever is pivotable between a holding position, in which position the thrust plate faces the abutment plate, and higher positions creating a larger distance between the thrust plate and the abutment plate, characterized in that in the used device the space confined by the lever, the thrust plate and the abutment plate is higher than at least two of the tiles to be transported and in that after lifting a tile, the tile is piled on a further tile which is subsequently lifted together with the first pile.

The present invention will be elucidated with reference to the figures wherein:
- Figure 1:: shows in perspective view an embodiment of a device according to the present invention;
- Figure 2:: shows in perspective view a frame of the device of Figure 1;
- Figure 3:: shows in perspective view a lever of the device of Figure 1;
- Figures 4A-H:: show consecutive steps of a method of moving tiles using the device of Figure 1;
- Figures 5:: shows the device of Figure 1 carrying a pile of tiles;
- Figure **6A-B:**: shows a clamping ring of the device of Figure 1 in perspective view and exploded view, respectively;
- Figure 7:: shows in exploded view the attachment of the abutment plate of the device of Figure 1;
- Figure 8A-C:: show in perspective view alternative abutment plates;
- Figure 9A-B:: show two alternative thrust plates;
- Figure 10A-B:: show an alternative embodiment of a lever for a trolley according to the invention;
- Figure 11:: shows the trolley of Figure 1 from the backside;
- Figure 12:: shows in detailed cross section an alternative embodiment of a device according to the invention.

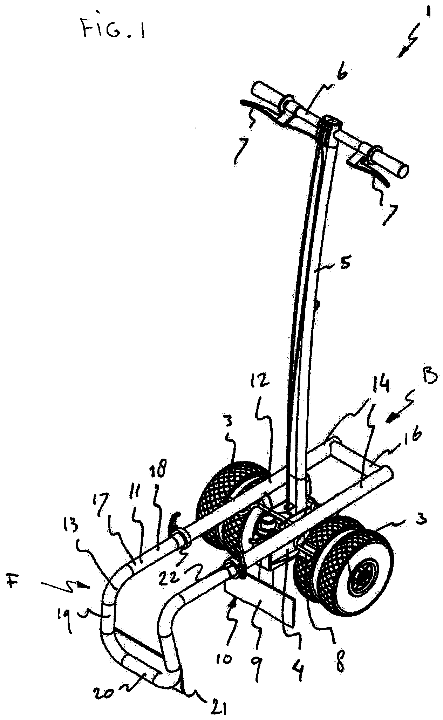

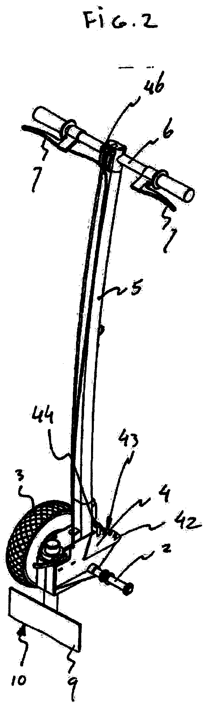

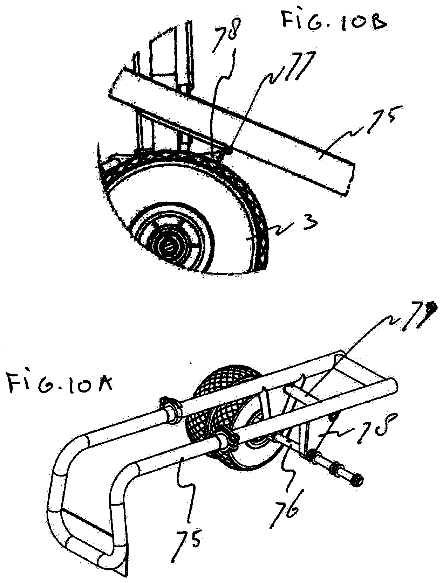

Figure 1 shows a trolley 1 for cutting out paving tiles or similar objects from a pavement and subsequently lifting and transporting the objects. The trolley 1 comprises an axle 2 (see Figure 2) with two double wheels 3. The axle 2 carries a frame 4, shown separately with the axis and one wheel in Figure 2. The frame 4 supports a handle 5 extending upwardly when the trolley 1 is in operational position. The top of the handle 5 is provided with a grip bar 6 extending horizontally in two opposite directions. The grip bar 6 is optionally provided with actuators 7, such as handbrakes for actuating a wheel brake 8 or for locking or unlocking a second pivoting mechanism as described in relation to Figures 10A and 10B, or for any other desired actuating function. The frame 4 also carries a substantially vertical abutment plate 9 at the front side of the wheels 3, with a lower edge 10 which extends below the wheels when the abutment plate 9 is in the vertical position. Preferably, the edge 10 is sharpened.

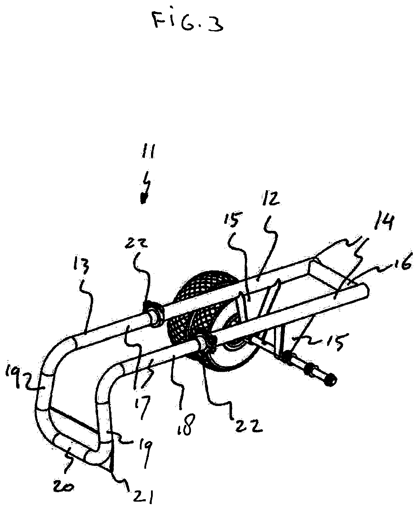

A lever 11 is pivotably supported by the axis 2. The lever 11 is shown separately with the axis and one wheel in Figure 3. The lever has a backside end B extending from the backside of the wheels 3 and a front end F at the front side of the wheels. The lever 11 comprises a base part 12 and an adjustable part 13. The base part 12 comprises two parallel symmetrically arranged tubes 14 which are both spaced from the axle 2 by a vertical support 15. At one side of the axle 2 a crossbar 16 joins the ends of the tubes 14. At the other side of the axle 2, the tubes 14 comprise open ends for telescopically receiving tubes 17 forming the adjustable part 13 of the lever 11. The tubes 17 of the adjustable part 13 comprise a forwardly extending section 18 ending into a downwardly extending spacer arm 19. The downwardly extending spacer arms 19 are bridged at their outer ends by a bridging section 20 which holds a thrust plate 21.

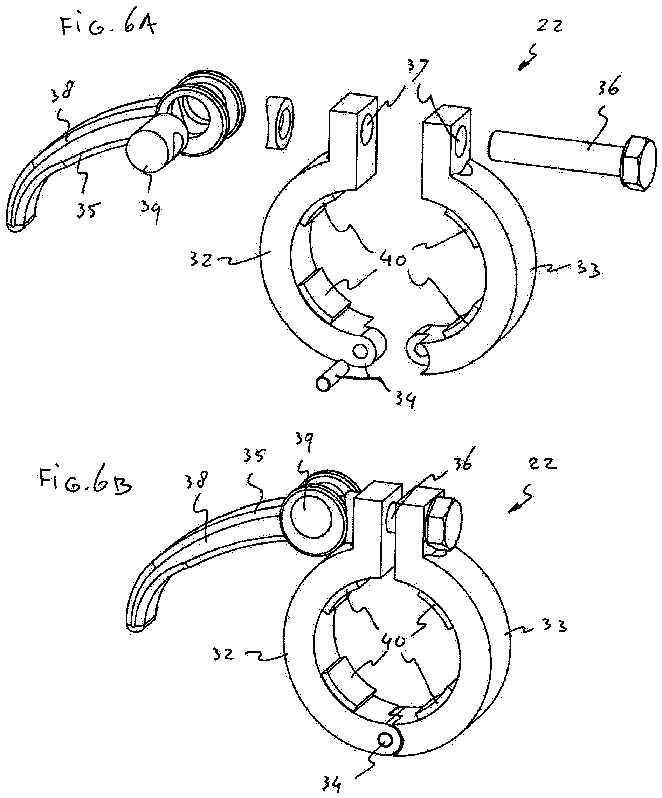

The tubes 17 of the adjustable part 13 have a similar cross section as the tubes 14 of the base part 12, e.g., circular, rectangular, triangular, square, polygonal or any other suitable cross sectional shape, but are of a smaller size so as to fit slideably within the tubes 14 of the base part 12. This way, the distance between the abutment plate 9 and the thrust plate 21 can be adjusted to the width of a given type of object to be transported. When the thrust plate 21 is at the desired distance from the abutment plate 9, the inner tubes 17 of the removable part 13 are fixated relative to the outer tubes 14 of the base part 12 by ring clamps 22, which are shown in more detail in Figure 6A and 6B and described in more detail hereinafter.

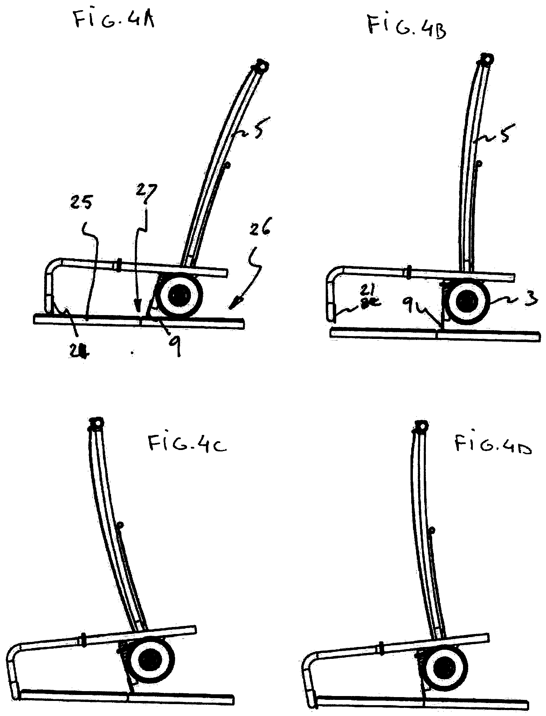

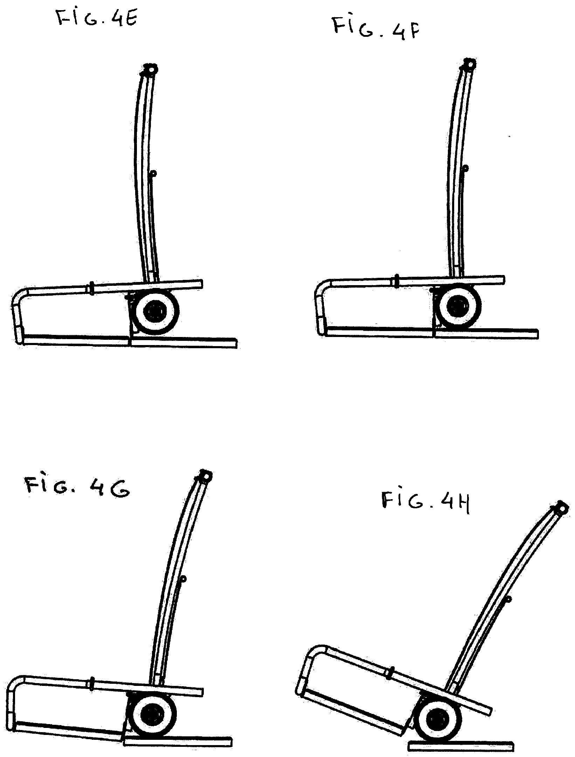

Figures 4A - 4H show in consecutive steps how the trolley 1 is used for separating and moving a tile 25 from a pavement 26. First, as shown in Figure 4A, the abutment plate 9 is positioned at short distance from a joint 27 at a first edge 29 of the tile 25 to be removed. In a next step, shown in Figure 4B, the frame 4 with the handle 5 is put in a vertical, upright position. In this position the trolley 1 rests on the abutment plate 9 while the wheels 3 are at a distance above the pavement 26. In a next step, shown in Figure 4C, the thrust plate 21 is positioned to abut the opposite edge 210. Subsequently, as shown in Figure 4D, the abutment plate 9 is shifted to the joint 27. The abutment plate 9 is then intro the joint 27, as shown in Figure 4E, until the wheels 3 rest on the pavement 26, as shown in Figure 4F, where the device 1 is in its holding position. The handle 5 of the frame 4 is now tilted backwards as shown in Figures 4G and 4H, respectively. The weight of the tile 25 tends to pull down the thrust plate 21 and the lever 10, and in doing so it clamps itself between the thrust plate 21 and the abutment plate 9 under its own weight, while the thrust and abutment plates are forced to maintain their holding position relative to each other. After putting down the tile 25 on the desired place of destination the lever 10 can be rotated upwardly, e.g., by pushing down the crossbar 16 which can be used as a pedal. This way, the distance between the thrust plate 21 and the abutment plate 9 is enlarged and the tile 25 is released.

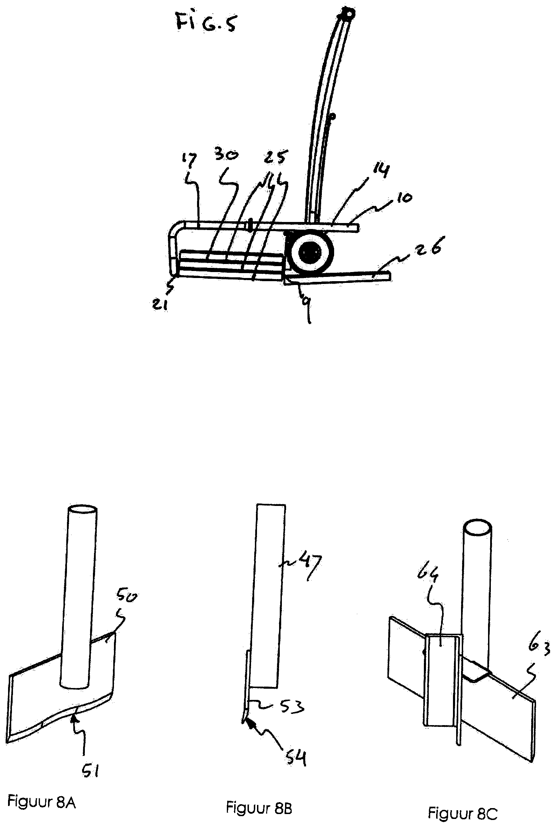

The vertical distance between the tubes 14, 17 of the lever 10 on the one hand and the abutment plate 9 and the thrust plate 21 on the other, allows lifting and transport of objects of a larger size or piles 30 of objects 25, as shown in Figure 5. This way, tiles 25 of a pavement 26 can be separated and removed within short time requiring little exertion.

Figure 6A and 6B show in more detail the clamping ring 22. The clamping ring 22 comprises two semi-circular sections 32, 33 connected by a hinge 34 at one end and by a tensioning member 35 at the other end. The tensioning member 35 comprises a bolt 36 extending through eyes 37 at the outer ends of the semi-circular sections 32, 33, and a handle 38 which is rotatable about an eccentrically arranged axis 39 between a release position and a tensioning position, in which the handle 38 pushes the eyes 37 against the bolt 36. The semi-circular sections 32, 33 are provided with inwardly extending cams 40.

The clamping rings 22 are arranged on the outer tubes 14 of the lever 11 at a position where the outer tubes are provided with openings (not shown) receiving the cams 40 of the clamping ring 22. The cams 40 are dimensioned in such a way that they engage the inner tubes 17 of the adjustable part 13 of the lever 11 in a clamping manner when the tensioning member 35 is in the tensioning position. When the handle 38 of the tensioning member 35 is put in the release position, the cams 40 can move outwardly and the inner tubes 16 regain freedom to slide within the outer tubes 14 of the base part 12 of the lever 11. The distance between the abutment plate 9 and the thrust plate 21 can then be adjusted, or the adjustable part of the lever 11 can completely be removed, e.g., for replacement by a different part with a differently shaped or sized thrust plate, if so desired.

As shown in Figure 2 the lower end of the handle 5 is held between two webs 42 provided with a plurality of indentations 43, each indentation being oriented under a different angle. The handle 5 is provided with two oppositely placed projections 44 dimensioned to form a tight fit with the indentations 43. By selecting different indentations 43 for positioning the projections 44, the angle between the handle 5 and the other parts of the trolley 1 can be adjusted, enabling a user to exert a force under a more favourable angle in a given situation.

The handle also comprises releasable clamps 46 which can be switched between a clamping condition and a release condition. When the clamps 46 are in the release condition, the grip bar 6 can be shifted in a lateral direction to a different position. This can be useful if tiles or slabs need to be removed which are laid close to a wall or other obstacle.

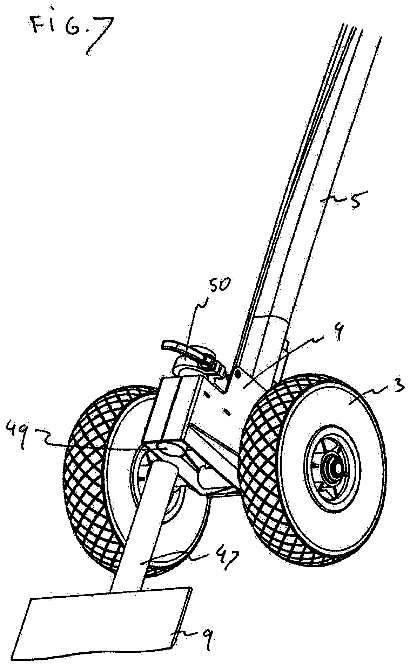

The abutment plate 9 is held by an inner tube 47 which is telescopically arranged in an outer tube 49 tubular, as shown in more detail in Figure 7. The position of the inner tube 47 relative to the outer tube 49 can be fixated by means of a clamping ring 50 of a similar construction as the clamping ring 22 in Figure 6. When the clamping ring 50 is in its release state, the abutment plate 9 can be moved up and down and it can be rotated. This way, the height of the abutment plate 9 can be adjusted, e.g., in dependence on the thickness of the tile or slab to be removed. The rotational orientation of the abutment plate 9 can also be adjusted, e.g., to improve the clamping effect.

This releasable coupling of the abutment plate 9 also allows replacement of the abutment plate by a differently sized or shaped abutment plate, if so desired. Examples of possible abutment plates are shown in Figures 8A - C. Figure 8A shows an abutment plate 50 with a lower edge 51 making an angle with the horizontal. In this embodiment, the edge 51 is not straight but is curved. Other embodiments may have a straight lower edge under an angle with the horizontal.

The abutment plate 53 in Figure 8B comprises an inclined lower edge 54. The edge 54 is inclined under an angle of 7 or 8 degrees. Other angles are also possible. Alternatively, the abutment plate can as a whole make an angle with the inner tube 47.

Figure 8C shows an abutment plate 63 carrying a vertically extending angle bar 64, which can be used to handle triangular tiles or tiles with a cut-out following a quarter of a circle, typically used for bordering trees in surrounded by a pavement.

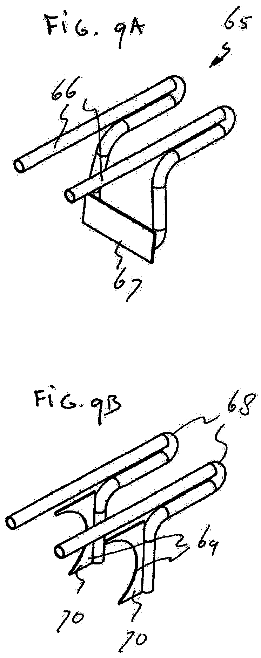

Variations of the adjustable frame part 13 holding the thrust plate 21 can also be used. For instance, a thrust plate can be used without the bridging section 20. Figures 9A and 9B show two alternatives for an adjustable frame part holding a thrust plate.

The embodiment shown in Figure 9A comprises a removable part 65 of a lever made of tubes 66 which are bent over 180 degrees at the end of the lever to return to a position about halfway of the removable part 65. This way, the thrust plate 67 is at shorter distance from the abutment plate and objects with a smaller width, such as curbs or railway sleepers, can be gripped.

The embodiment shown in Figure 9B comprises two separate removable parts 68 which can be jointly used. The thrust plate 69 comprises two separate grippers 70 with a semi-circular gripping surface of the same or different diameters. These can for instance be used for gripping cylindrical objects.

Figure 10A shows a lever 75 of a further possible embodiment of a trolley according to the invention. In this case the lever 75 is pivotable about the axle 76 and also about a second pivoting axis 77 near or at the top end of the vertical support 78. Figure 10B shows the situation wherein the lever 75 is pivoted upwardly about the second pivoting axis 77. This way, the lever 75 can rotate with a substantially larger radius so it can grip higher piles of slabs and/or objects of larger dimensions.

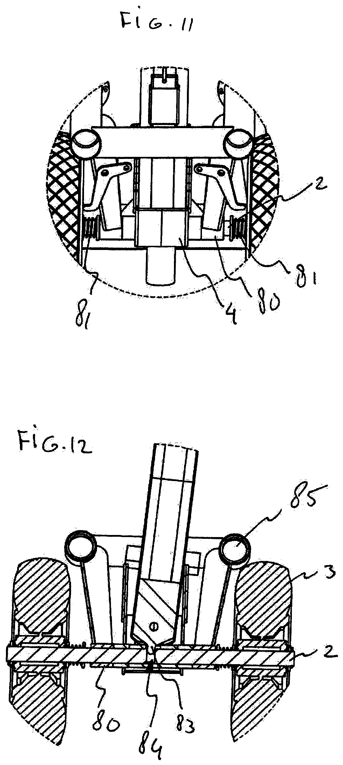

Figure 11 shows how the frame 4 of the trolley 1 is supported by the axle 2. The frame comprises a base tube 80 which is slideable over the axle 2 in its longitudinal direction. At either side of the base tube 80 a spring 81, 82 pushes the base tube 80 away from the adjacent wheel 3. This way, the frame 4 is biased towards the center of the axle 2, but the user has the possibility to move the frame in a lateral direction, e.g., for accurately positioning a transported tile when it is laid at its final destination.

Figure 12 shows an alternative embodiment with a handle 82 comprising a projection 83 fit into an opening 84 in the tube 80 in a tiltable manner. This way, the handle 82 can be tilted and the user has more degrees of freedom to control the trolley during operation. The range of possible tilting angles is limited by a semi-circular fence 85 which spans art least a 180 degrees arc at the backside so the handle 82 can be moved backwards to tilt the complete frame.

## Claims

1. Method of transporting tiles or similar objects using a device (1) comprising an axle (2) with one or more wheels (3), the axle carrying a frame (4) with a handle (5), an abutment plate (9) in front of the one or more wheels for abutment of a first edge of the tile, and a lever (11) with a backside end (B) extending from the backside of the one or more wheels and a front end (F) carrying a thrust plate (21) for engaging a second edge of the tile opposite to the first edge, wherein the lever is pivotable between a holding position, in which position the thrust plate faces the abutment plate, and higher positions creating a larger distance between the thrust plate and the abutment plate, **characterized in that** in the used device the space confined by the lever (11), the thrust plate (21) and the abutment plate (9) is higher than at least two of the tiles to be transported and **in that** after lifting a tile, the tile is piled on a further tile which is subsequently lifted together with the first tile.

## Patentansprüche

1. Verfahren zum Transportieren von Ziegeln oder ähnlichen Objekten unter Verwendung einer Vorrichtung (1), die eine Achse (2) mit einem oder mehreren Rädern (3) aufweist, wobei die Achse einen Rahmen (4) mit einem Griff (5), eine Auflagerplatte (9) vor dem einen oder den mehreren Rädern für das Auflagern eines ersten Rands des Ziegels, und einen Hebel (11) mit einem rückseitigen Ende (B), das sich von der Rückseite eines oder mehrerer Räder erstreckt, und einem Vorderende (F), das ein Schubblech (21) zum Angreifen an einem zweiten Rand des Ziegels entgegengesetzt zu dem ersten Rand trägt, wobei der Hebel zwischen einer Halteposition, in welcher Position das Schubblech der Auflagerplatte zugewandt ist, und höheren Positionen, die einen größeren Abstand zwischen dem Schubblech und der Auflagerplatte erzeugen, schwenkbar ist, **dadurch gekennzeichnet, dass** der durch den Hebel (11), das Schubblech (21) und die Auflagerplatte (9) begrenzte Raum in der verwendeten Vorrichtung höher als wenigstens zwei der zu transportierenden Ziegel ist, und dass ein Ziegel nach dem Heben des Ziegels auf einen weiteren Ziegel gestapelt wird, der anschließend zusammen mit dem ersten Ziegel angehoben wird.

## Revendications

1. Procédé pour transporter des carreaux ou des objets similaires à l'aide d'un dispositif (1) comprenant un essieu (2) avec une ou plusieurs roues (3), l'essieu portant un bâti (4) avec une poignée (5), une plaque de butée (9) en face d'une ou plusieurs roues pour la butée d'un premier bord du carreau, et un levier (11) avec une extrémité arrière (B) s'étendant à partir de l'arrière d'une ou plusieurs roues et une extrémité avant (F) portant une plaque d'engrenage planétaire poussée (21) pour mettre en prise un second bord de carreau opposé au premier bord, dans lequel le levier peut pivoter entre une position de maintien, dans laquelle position, la plaque de poussée fait face à la plaque de butée, et des positions plus hautes créant une plus grande distance entre la plaque de poussée et la plaque de butée, **caractérisé en ce que**, dans le dispositif utilisé, l'espace confiné par le levier (11), la plaque de poussée (21) et la plaque de butée (9) est plus haut qu'au moins deux des carreaux à transporter et **en ce que**, après le levage d'un carreau, le carreau est empilé sur un carreau qui est ensuite soulevé conjointement avec le premier carreau.
